# FASCICULE DE BREVET EUROPEEN

(11) **EP 0 715 926 B1**
(45) Date de publication et mention de la délivrance du brevet: **10.06.1998**
(21) Numéro de dépôt: 95118681.6
(22) Date de dépôt: 28.11.1995
(51) Int. Cl.: B23K 26/08, A01G 25/02

(54) **Procédé de fabrication de tuyaux d'irrigation goutte-à-goutte**
Verfahren zur Herstellung von Rohren zur tropfenweisen Bewässerung
Method for producing pipes for drip irrigation

(30) Priorité: 07.12.1994 FR 9414712
(43) Date de publication de la demande: 12.06.1996
(73) Titulaire: E. KERTSCHER S.A., CH-1462 Yvonand (CH)
(72) Inventeur: Buluschek, Bruno, CH-1026 Echandens (CH)
(74) Mandataire: Thérond, Gérard Raymond

(56) Documents cités:
- FR-A- 2 389 447
- US-A- 3 874 598
- US-A- 4 095 084

## Description

La présente invention est relative à un procédé de fabrication de tuyaux d'irrigation goutte-à-goutte.

Il est de technique courante d'utiliser, pour certaines irrigations, des tuyaux dits "goutte-à-goutte". Il s'agit de tuyaux dont la paroi est percée, à des intervalles fixés à l'avance, par des trous de petits diamètres, par lesquels s'écoule l'eau dans le sol. Pour contrôler avec précision le débit des trous, on prévoit un limiteur de débit, couramment appelé "goutteur", qui se compose d'une pièce de matière plastique, qui est collée sur la paroi interne du tuyau. Cette pièce présente, du côté tourné vers la paroi intérieure du tuyau, une partie en creux, qui forme une chambre collectrice. Cette chambre collectrice est reliée à l'espace intérieur du tuyau par un conduit à pertes de charge calculées, par exemple un conduit formant labyrinthe. Ce labyrinthe est constitué par une rainure préparée à l'avance sur la face du goutteur qui est destinée à être tournée vers la face interne du tuyau.

Dans la pratique, dans la plupart des cas, un tel tuyau d'irrigation est fabriqué de la manière suivante :

Du polymère, polyéthylène en général, est envoyé dans une extrudeuse et celle-ci produit, en continu, et via une tête de formage, un tube dans les dimensions voulues. Dès que le tube, encore chaud, sort de la tête d'extrusion, un goutteur, amené à travers la tête d'extrusion, est pressé contre la paroi intérieure du tube et se colle contre celui-ci en fondant localement.

Une fois l'ensemble tuyau-goutteur refroidi dans un bac à eau, un trou est percé dans la paroi du tuyau, au droit de la chambre collectrice. Aujourd'hui, cette opération est exécutée de la manière suivante :

Pour pouvoir percer au bon endroit, on doit détecter le début d'un goutteur dans le tuyau. Vu que le tube, a l'endroit où il y a un goutteur, est plus épais que le tuyau seul, on détecte le début du goutteur dans le tube en écrasant le tube à paroi mince par un moyen mécanique, par exemple entre deux rouleaux pressés l'un contre l'autre par un ressort. Dès qu'un goutteur passe entre les rouleaux, ceux-ci doivent se déplacer pour faire la place pour le goutteur. Ce déplacement' est détecté par un capteur électrique et utilisé comme signal pour une perceuse qui percera l'ouverture dans le tuyau afin de créer un passage entre l'intérieur du tuyau via le goutteur à l'extérieur.

Le perçage d'une ouverture dans le tuyau est ensuite exécuté par des moyens classiques et mécaniques (foret et perceuse).

Comme la détection de la présence d'un goutteur nécessite un déplacement d'un élément mécanique ayant une masse, l'inertie de cet élément limite la vitesse et la précision de la détection du début du goutteur.

Le perçage prend un certain temps. Vu que le tuyau avance pendant ce temps, le système de perçage doit, pendant le temps de perçage, suivre le tuyau avec la vitesse de celui-ci. Il en résulte un appareillage compliqué et coûteux.

Par ailleurs, on doit faire observer que le perçage est une opération où l'on enlève de la matière, soit une rondelle correspondant au trou, soit en copeaux. L'évacuation de cette matière ne peut pas être assurée à 100 %, d'où des fréquents arrêts de production. Il est à noter qu'un polymère, plus précisément le polyéthylène utilisé pour ces tuyaux, est plus difficile à percer que, par exemple, un métal : le polyéthylène fond facilement sous la chaleur créée par la friction du foret et "gèle" sur l'outil qui, ensuite, ne coupe plus.

La présente invention a pour but de supprimer ou pour le moins réduire ces inconvénients, et de fournir un système simple qui permette d'obtenir des débits élevés lors de la fabrication de tuyaux d'irrigation du type "goutte-à-goutte".

Pour obtenir ce résultat, l'invention fournit un procédé de fabrication de tuyaux d'irrigation goutte-à-goutte, comprenant les opérations consistant à :
- prévoir un tuyau continu par extrusion,
- souder sur la paroi intérieure du tuyau un limiteur de débit comprenant une paroi étanche qui définit avec la paroi intérieure du tuyau une chambre de collecte reliée à l'espace intérieur du tuyau par un conduit à pertes de charge calculée, et
- percer la paroi du tuyau de façon à mettre ladite chambre de collecte en communication avec l'extérieur,
   ce procédé ayant pour particularités que pour percer la paroi du tuyau, on utilise un capteur sans contact apte à détecter le début et/ou la fin du passage d'un limiteur de débit lorsque le tube se déplace longitudinalement par rapport au capteur,
   et on utilise un laser pour percer la paroi du tuyau au droit de la chambre de collecte.

L'invention va maintenant être exposée de façon plus détaillée à l'aide d'un exemple pratique, illustré avec les dessins, parmi lesquels :
Figure 1 est une vue en perspective schématique d'un tuyau d'irrigation qui peut être obtenu par le procédé de l'invention,
Figure 2 est une vue en perspective d'un goutteur vu de dessus, avant sa mise en place dans le tuyau d'irrigation et
Figure 3 est une vue schématique d'une installation de fabrication de tuyaux d'irrigation, cette installation étant conforme à l'invention.

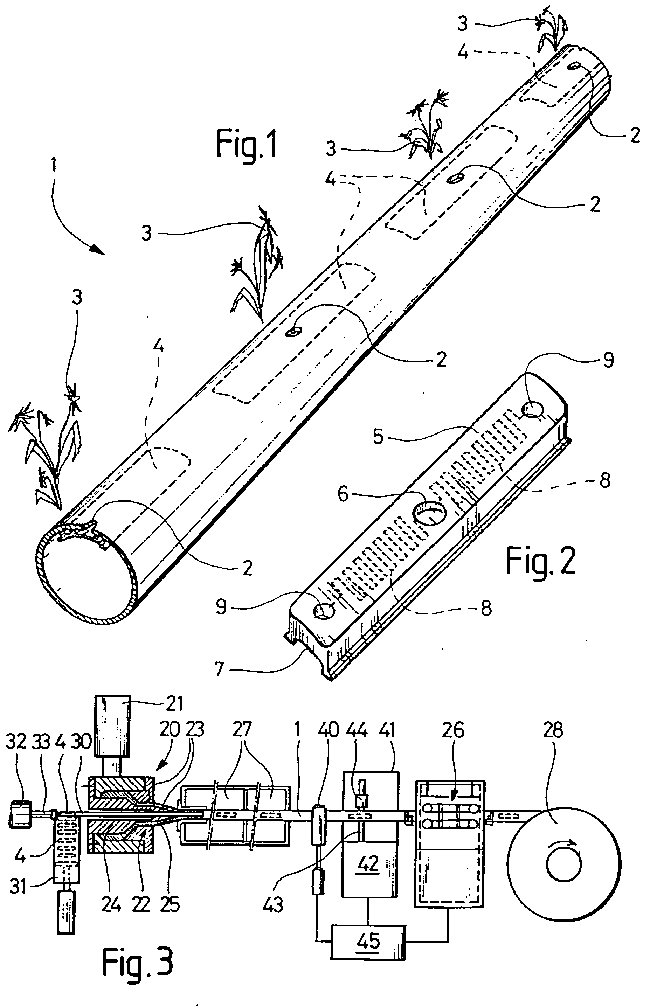

La figure 1 montre un tuyau d'arrosage 1, en matière plastique, par exemple du polyéthylène, qui présente, à intervalle régulier, des trous 2, par lesquels l'eau peut s'écouler pour arroser des végétaux 3. Au voisinage des trous 2 sont placés, à l'intérieur du tuyau, et donc non visibles de l'extérieur, des goutteurs 4 dont la structure est explicitée à l'aide de la figure 2. Le goutteur, avant sa mise en place, est une pièce en matière plastique, en principe de même composition que celle du tube 1, encore que cela ne soit pas obligatoire. Le goutteur 4 présente une forme de parallélépipède allongé, avec une surface "extérieure" 5, qui présente, en section transversale, une forme incurvée correspondant à la courbure de la paroi intérieure du tube 1. Dans cette surface 5 est découpée, une chambre de collecte 6, située sensiblement dans sa partie centrale, et qui n'atteint pas la face opposée du goutteur. Comme le montre la figure 2, dans la surface 5 sont creusés deux canaux 8, qui relient la chambre de collecte 6 à deux passages 9, situés chacun vers une extrémité du goutteur 4, et qui traversent le goutteur, pour déboucher sur la face opposée, ou interne, 7.

Dans le tube terminé, le goutteur 4 est soudé, ou de préférence thermo-soudé, par toute sa surface extérieure 5, sur la face interne du tube 1. Le trou 2, qui traverse la paroi du tube 1, débouche dans la chambre de collecte 6. On comprendra que l'eau contenue à l'intérieur du tube 1 s'écoule vers l'extérieur en passant par les passages 9, les conduits 8, la chambre de collecte 6 et les trous 2.

Si on se réfère maintenant à la figure 3, on constate que l'appareillage de fabrication du tube 1 comprend une installation d'extrusion 20, comprenant une chambre de fusion 21 de la matière plastique, qui alimente un ensemble 22 pourvu d'une filière 23, à l'intérieur de laquelle est prévu un mandrin conique 24, disposé de telle façon qu'il sort de la filière une ébauche tubulaire 25.

L'ébauche 25 est tirée par un appareillage de traction 26, en passant à travers des chambres de refroidissement et calibrage 27. Au-delà du dispositif de traction 26, le tube est enroulé sur un tambour 28.

Une telle disposition est classique dans la technique de fabrication des tubes en matière plastique.

Pour fixer les goutteurs, il est prévu que le mandrin 24 présente un passage axial à l'intérieur duquel est disposée une tige de guidage 30. Cette tige de guidage reçoit des goutteurs 4 à partir d'un dispositif d'alimentation 31.

Un dispositif de déplacement 32, muni d'un poussoir 33, est disposé pour faire avancer les goutteurs 4 jusque dans les dispositifs de refroidissement et calibrage 27. Les dimensions de la pièce de guidage 30 sont calculées pour que, à cet endroit, l'ébauche de tube 25, dont le diamètre est réduit par cet appareillage, vient en contact avec le goutteur au moment où elle est encore pâteuse, ce qui assure le thermo-soudage de la face supérieure 5 du goutteur contre la paroi intérieure de l'ébauche. Une telle disposition est déjà connue.

En sortant des dispositifs de refroidissement et calibrage 27, le tube 1 rencontre un détecteur de goutteur 40, sensible à la variation de capacité électrique résultant de l'arrivée d'un goutteur sous sa cellule de détection.

Le détecteur 40 est d'un type connu, sa sensibilité doit être adaptée à la nature du matériau dont est fait le goutteur. On indique à ce sujet que la constante diélectrique du polyéthylène se distingue de celle de l'air par un facteur 2,3. Cet écart important permet d'utiliser un grand nombre de détecteurs du commerce tel que celui commercialisé par exemple par la société Baumer, Frauenfeld, Suisse.

A la sortie du détecteur 40, le tube 1 pénètre dans une installation de perçage 41, qui comprend un laser 42 relié par une fibre optique 43 à une optique de focalisation 44.

Un organe de commande 45 est relié d'une part au dispositif d'entraînement 26, et d'autre part au détecteur de goutteur 40. A partir des données fournies par ces deux organes et les informations concernant les dimensions du goutteur, plus précisément la distance entre l'extrémité avant, dans le sens de la progression, du goutteur 4 et le centre de la chambre de collecte 6, il calcule le moment où cette chambre de collecte va se trouver au droit de l'optique 44. Il commande alors l'émission du rayonnement laser.

L'utilisation d'un laser pour percer, couper et souder, est connue et souvent utilisée dans l'industrie du métal. L'effet physique est que la lumière cohérente est partiellement absorbée par la surface de l'objet. Cette énergie absorbée chauffe localement l'objet et le fait fondre localement si l'énergie est suffisamment grande.

Le polyéthylène utilisé pour les tuyaux d'irrigation ne convient pas, à priori, pour un tel procédé car le coefficient d'absorption est très faible. Le polyéthylène est transparent dans la longueur d'onde de la plupart des lasers existants.

Pour la fabrication des tuyaux d'irrigation, on n'utilise pas un polyéthylène pur car il n'est pas assez résistant contre les rayons ultra-violets du soleil auxquels ils sont constamment exposés. Pour lutter contre cet effet, on ajoute du noir de carbone comme stabilisant contre les rayons ultra-violets.

Un polyéthylène contenant quelques pour mille de noir de carbone possède un coefficient d'absorption dans la longueur d'onde d'un laser, par exemple du type Nd/YAG qui est suffisamment grand pour que l'énergie de la lumière soit transformée en chaleur d'une manière suffisante.

La chaleur dégagée par l'impact du rayonnement laser sur la paroi du tube 1 doit être suffisante pour faire un trou et volatiliser la matière correspondante. De cette façon, il ne subsiste aucun déchet solide. Cependant, cette chaleur doit être suffisamment faible pour ne pas endommager le goutteur lui-même au point d'ouvrir une communication directe entre la chambre de collecte 6 et la face opposée 7 du goutteur.

Plusieurs artifices peuvent être employés pour réduire le risque d'un tel incident, tout en obtenant chaque fois un perçage correcte : on peut prévoir, par exemple, que l'optique 44 comprend une lentille fortement convergente sur la paroi du tube 1. La paroi opposée formant le fond de la chambre de collecte 6 se trouvant écartée du plan focale de la lentille fortement convergente recevra alors une quantité de lumière moins concentrée. On peut également prévoir que le goutteur est moins chargé en noir de carbone ou est en une autre matière plus transparente au rayonnement laser. On pourrait également faire un dépôt d'une substance réfléchissante sur le fond de la chambre de collecte.

En règle générale, de tels artifices ne sont pas nécessaires, si les caractéristiques du tube 1 sont maintenues dans des tolérances suffisamment étroites, à condition de bien choisir l'énergie apportée par le laser lors de la création de chaque trou.

Dans la technique actuelle, la vitesse d'obtention de tubes est limitée à environ 80 mètres/minute, en raison du fait que le perçage mécanique ne permet guère de dépasser une cadence de 200 trous par minute. Le dispositif de l'invention permet au moins de doubler la cadence de perçage, et permet également de doubler la vitesse d'extrusion, sans produire de résidus solides gênant comme dans la technique antérieure.

Aux grandes vitesses de défilement, le trou percé selon l'invention peut être légèrement oblong. Si cela présente un inconvénient, il est possible d'y échapper en prévoyant, par exemple, dans l'optique 44, un miroir de déviation synchronisé avec le perçage du trou. Cette technique simple évite d'avoir à faire à un laser délivrant la même quantité d'énergie dans un temps plus court, c'est-à-dire un laser plus puissant, donc plus coûteux.

Suivant une version simplifiée, l'optique est placée en arrière, dans le sens du défilement, du détecteur 40, à une distance sensiblement égale à celle qui sépare l'extrémité avant d'un goutteur de sa chambre de collecte, et le signal émis par le capteur 40 commande directement et immédiatement l'émission de l'énergie laser pour faire le trou. Il n'y a plus à tenir compte de la vitesse de défilement du tuyau. En variante, l'optique 44 peut être placée en avant du détecteur 40, le laser étant commandé alors par un signal correspondant à la fin du passage d'un goutteur devant le détecteur.

De préférence, on utilise, comme capteur sans contact, un capteur capacitif sensible à la variation de capacité provoquée par l'arrivée d'un limiteur de débit.

Dans une version perfectionnée, qui permet de grandes vitesses de défilement et de grandes variations de celle-ci, on fait défiler le tuyau à une vitesse à peu près constante, on mesure cette vitesse, et on détermine le moment de perçage du trou en tenant compte de l'instant de détection du début et/ou de la fin du passage d'un limiteur de débit, de la vitesse de défilement, de la distance entre les extrémités du limiteur de débit et de sa chambre de collecte, et de la position relative du capteur et du poste de perçage.

Dans une version simplifiée, on utilise un poste de perçage situé à une distance du détecteur égale à l'écart entre l'extrémité avant ou arrière du limiteur de débit dans le sens de déplacement du tube, et on opère le perçage immédiatement après que le détecteur a signalé le début ou la fin du passage du limiteur de débit.

On notera que, dans ce cas, l'inertie thermique de la matière à volatiliser pour faire le trou oblige à prévoir que l'écart entre détecteur et poste de perçage diffère de l'écart entre les extrémités du goutteur et la chambre de collecte, et le terme correctif dépend de la vitesse de défilement, si bien que cette méthode est moins souple que la précédente.

De préférence, dans une réalisation pratique, le tuyau est en polyéthylène chargé de noir de carbone, et le laser est un laser Nd/YAG.

## Revendications

1. Procédé de fabrication de tuyaux d'irrigation goutte-à-goutte (1), comprenant les opérations constituant à :
- préparer un tuyau continu par extrusion,
- souder sur la paroi intérieure du tuyau un limiteur de débit (4) comprenant une paroi étanche qui définit avec la paroi intérieure du tuyau une chambre de collecte (6) reliée à l'espace intérieur du tuyau par un conduit (8) à pertes de charge calculée, et
- percer la paroi du tuyau de façon à mettre ladite chambre de collecte en communication avec l'extérieur,
caractérisé en ce que, pour percer la paroi du tuyau, on utilise un capteur (40) sans contact, apte à détecter le début et/ou la fin du passage d'un limiteur de débit lorsque le tube se déplace longitudinalement par rapport au capteur,
et on utilise un laser (42) pour percer la paroi du tuyau au droit de la chambre de collecte.

2. Procédé selon la revendication 1, caractérisé en ce qu'on utilise, comme capteur sans contact, un capteur capacitif sensible à la variation de capacité provoquée par l'arrivée d'un limiteur de débit.

3. Procédé selon l'une des revendications 1 ou 2, caractérisé en ce qu'on fait défiler le tuyau à une vitesse à peu près constante, on mesure cette vitesse, et on détermine le moment de perçage du trou en tenant compte de l'instant de détection du début et/ou de la fin du passage d'un limiteur de débit, de la vitesse de défilement, de la distance entre les extrémités du limiteur de débit et de sa chambre de collecte, et de la position relative du capteur et du poste de perçage.

4. Procédé selon l'une des revendications 1 ou 2, caractérisé en ce qu'on utilise un poste de perçage situé à une distance du détecteur égale à l'écart entre l'extrémité avant ou arrière du limiteur de débit dans le sens de déplacement du tube, et on opère le perçage immédiatement après que le détecteur a signalé le début ou la fin du passage du limiteur de débit.

5. Procédé selon l'une des revendications 1 à 4, dans lequel le tuyau est en polyéthylène chargé de noir de carbone, et le laser est un laser Nd/YAG.

## Claims

1. Method for manufacturing drip irrigation tubes (1), comprising the following steps of :
- providing a continuous tube by extrusion,
- welding onto the internal wall of the tube a flow regulator (4) comprising a watertight wall which defines with the internal wall of the tube a collecting chamber (6) connected to the interior space of the tube by a predetermined loss of head conduit (8), and
- perforating the wall of the tube so that said collecting chamber communicates with the exterior,
characterized in that, in order to perforate the wall of the tube, a contactless detector (40) is used, able to detect the beginning and/or end of a flow regulator passing before it when the tube moves longitudinally in relation to said detector,
and a laser (42) is used for perforating the wall of the tube at a location facing the collecting chamber.

2. Method according to claim 1, characterized in that a capacitive sensor sensitive to the variation in capacity caused by the arrival of a flow regulator, is used as contactless detector.

3. Method according to one of claims 1 or 2, characterized in that the tube is moved at a more or less constant speed, this speed is measured, and the moment for perforating the hole is determined taking account of the moment of detection of the beginning and/or end of the passing of a flow regulator, the tube movement speed, the distance between the ends of the flow regulator and its collecting chamber, and the relative position of the detector and the perforating station.

4. Method according to one of claims 1 or 2, characterized in that one uses a perforating station situated at a distance from the detector equal to the distance between the front or rear end of the flow regulator in the direction of movement of the tube and that perforation is carried out immediately after the detector has signalled the beginning or the end of the flow regulator.

5. Method according to one of claims 1 to 4, in which the tube is made of polyethylene containing carbon black and the laser is a Nd/YAG laser.

## Patentansprüche

1. Verfahren zum Herstellen von Rohren (1) für tropfenweise Bewässerung, umfassend die Arbeitsgänge, bestehend aus:
- Herstellen eines kontinuierlichen Rohres durch Extrusion,
- Anschweißen an die Innenwandung des Rohres eines Durchsatzbegrenzers (4), umfassend eine dichte Wandung, die mit der Innenwandung des Rohres eine mit dem Rohrinneren über eine Leitung (8) mit berechnetem Druckabfall verbundene Sammelkammer (6) begrenzt, und
- Durchbohren der Rohrwandung derart, daß die Sammelkammer mit dem Außenraum in Kommunikation gebracht wird,
dadurch gekennzeichnet, daß man für das Durchbohren der Rohrwandung einen berührungslosen Sensor (40) verwendet, der den Beginn und/oder das Ende des Durchlaufs eines Durchsatzbegrenzers erfassen kann, wenn das Rohr sich in Längsrichtung relativ zum Sensor verlagert,
und man einen Laser (42) für das Durchbohren der Rohrwandung am Ort der Sammelkammer verwendet.

2. Verfahren nach Anspruch 1, dadurch gekennzeichnet, daß man als berührungslosen Sensor einen kapazitiven Sensor verwendet, der gegenüber der durch das Eintreffen eines Durchsatzbegrenzers bewirkten Kapazitätsänderung empfindlich ist.

3. Verfahren nach einem der Ansprüche 1 oder 2, dadurch gekennzeichnet, daß man das Rohr mit einer etwa konstanten Geschwindigkeit laufen läßt, diese Geschwindigkeit mißt, und den Zeitpunkt des Durchbohrens des Loches unter Berücksichtigung des Augenblicks der Erkennung des Beginns und/oder Endes des Durchlaufs eines Durchsatzbegrenzers, der Laufgeschwindigkeit, dem Abstand zwischen den Enden des Durchsatzbegrenzers und seiner Sammelkammer sowie der Relativposition des Sensors und der Bohrstation bestimmt.

4. Verfahren nach einem der Ansprüche 1 oder 2, dadurch gekennzeichnet, daß man eine Bohrstation verwendet, die in einem Abstand von dem Sensor gleich dem Abstand zwischen dem vorderen oder hinteren Ende des Durchsatzbegrenzers in Verlagerungsrichtung des Rohres plaziert ist, und man das Durchbohren ausführt unmittelbar nachdem der Sensor den Beginn oder das Ende des Durchlaufs des Durchsatzbegrenzers signalisiert hat.

5. Verfahren nach einem der Ansprüche 1 bis 4, bei dem das Rohr aus Polyäthylen mit Rußfüllstoff besteht und der Laser ein Nd/YAG-Laser ist.
